# NEUE EUROPÄISCHE PATENTSCHRIFT

(11) **EP 0 906 378 B2**
(45) Veröffentlichungstag und Bekanntmachung des Hinweises auf die Entscheidung über den Einspruch: **12.03.2008**
(45) Hinweis auf die Patenterteilung: 23.10.2002
(21) Anmeldenummer: 97928165.6
(22) Anmeldetag: 09.06.1997
(51) Int. Cl.: C09J 143/04, C09J 123/26, C09J 115/00, C09J 119/00

(54) **REAKTIVE SCHMELZKLEBSTOFF-ZUSAMMENSETZUNG FÜR ISOLIERGLAS**
REACTIVE MELT ADHESIVE COMPOSITION FOR DOUBLE GLAZING
COMPOSITION DE COLLE A FUSION REACTIVE POUR VERRE ISOLANT

(30) Priorität: 18.06.1996 DE 19624236
(43) Veröffentlichungstag der Anmeldung: 07.04.1999
(73) Patentinhaber: H.B. FULLER LICENSING & FINANCING, INC., St. Paul, MN 55164 (US)
(72) Erfinder: GRIMM, Stefan, D-68723 Schwetzingen (DE); PRÖBSTER, Manfred, D-69226 Nu loch (DE)
(74) Vertreter: Winkler, Andreas Fritz Ernst
(86) Internationale Anmeldenummer: PCT/EP1997/002995
(87) Internationale Veröffentlichungsnummer: WO 1997/048778

(56) Entgegenhaltungen:
- EP-A- 0 053 022
- EP-A- 0 252 372
- EP-A- 0 312 967
- WO-A-89/11514
- WO-A-91/06580
- WO-A-95/13449
- DE-A- 2 555 383
- DE-A- 4 407 892
- JP-A- 5 179 217
- US-A- 4 144 196
- US-A- 4 198 254
- US-A- 4 808 664
- PATENT ABSTRACTS OF JAPAN vol. 096, no. 002, 29.Februar 1996 & JP 07 278522 A (NIPPON UNICAR CO LTD), 24.Oktober 1995,

## Beschreibung

Die Erfindung betrifft Zwei- oder Mehrscheiben-Isolierglas sowie Verfahren zu dessen Herstellung.

Isoliergläser haben sich im Bauwesen und zum großen Teil auch im Fahrzeugbau aufgrund ihrer Vorzüge weitgehend durchgesetzt. Besonders hervorzuheben sind die verbesserte Wärme- und Geräuschdämmung gegenüber Einfachverglasungen. Mehrscheiben-Isolierglassysteme bestehen bekanntermaßen aus zwei oder mehr parallel angeordneten Glasscheiben, die in ihrem Randbereich so verbunden sind, daß der durch die Scheiben eingeschlossene Zwischenraum so gegen die Umgebungsluft abgedichtet ist, daß keine Feuchtigkeit in diesen Zwischenraum eindringen kann. Weiterhin ist der Randverbund so ausgebildet, daß er allen durch wechselnde Klimabelastungen entstehenden mechanischen und chemischen Beanspruchungen standhält. In vielen Fällen ist dieser Zwischenraum auch mit trockenen Gasen gefüllt, die eine Erhöhung der Wärmedämmung bzw. Erhöhung der Schalldämmung gegenüber Luftfüllung bewirken.

Bei den handelsüblichen Isolierglasanordnungen sorgen starre Abstandshalter fiir den gewünschten Abstand zwischen den Glasscheiben. In der häufigsten Ausführungsform besteht der Abstandshalter aus einem Aluminium- oder Stahlblechhohlprofil. Er ist in der Nähe der Ränder der Glasscheiben so angeordnet, daß der Abstandshalter zusammen mit den Randbereichen der Glasscheibe eine nach außen weisende Rinne zur Aufnahme von Dicht- und Klebstoffen bilden. Üblicherweise weist die dem Zwischenraum zwischen den Glasscheiben zugewandte Seite des Abstandshalters kleine Öffnungen auf und der Hohlraum des Abstandshaiters dient zur Aufnahme eines Trockenmittels zur Adsorption der Feuchtigkeit und eventuell vorhandenen Lösungsmittelresten in dem Luft- bzw. Gasraum zwischen den Scheiben. Dadurch wird verhindert, daß sich an der Innenseite der Isolierglasscheiben bei niedrigen Umgebungstemperaturen Feuchtigkeit kondensiert. Bei hochwertigen Isolierglassystemen befindet sich zwischen den den Glasscheiben zugewandten Flächen des Abstandshalters und der Glasoberfläche ein Dichtstoff mit hoher Wasserdampfsperrwirkung. Hierfür kommen in der Regel Formulierungen auf der Basis von Polyisobutylen und/oder Butylkautschuk zur Anwendung. Die durch die nach außen gerichtete Fläche des Abstandshalters und die Randbereiche der Glasscheiben gebildete Rinne wird in der Regel mit einem zweikomponentigen Kleb-/Dichtstoff ausgefüllt, der einen ausreichenden Festigkeitsverbund der Isolierglasanordnung erzielt. Dabei muß dieser Kleb-/Dichtstoff eine gute Haftung zu den Scheiben haben und außerdem elastisch genug sein, um die Expansions- bzw. Kontraktionsbewegungen der Glasscheiben bei wechselnden Klimaeinwirkungen standzuhalten.

Die Herstellung derartiger hochwertiger Isolierglasanordnungen besteht daher naturgemäß aus einer Reihe von komplexen Arbeitsabläufen und ist trotz hohen Automatisierungsgrades bei großen Fertigungsstraßen sehr kostenintensiv. Es hat daher in der Vergangenheit nicht an Versuchen gefehlt, die komplexen Arbeitsabläufe zur Herstellung von Isoliergläsern zu vereinfachen, insbesondere ohne vorprofilierte Abstandshalter auszukommen.

Das sogenannte "System Biver" besteht beispielsweise aus einem thermoplastischen inneren Strang, dessen Polymerbestandteil vorzugsweise aus Polyisobutylen bzw. Butylkautschuk aufgebaut ist und der ein Molekularsieb zur Adsorption von Feuchtigkeit enthält. Dieser Strang ist dem Scheibenzwischenraum zugewandt und wird dabei zunächst auf eine Scheibe extrudiert, anschließend wird die zweite Scheibe darüber positioniert und die beiden Scheiben werden anschließend miteinander auf den vorbestimmten Abstand verpreßt. Danach wird der äußere Randbereich durch einen in der Regel zweikomponentigen Kleb-/Dichtstoff versiegelt. Bei dieser Anordnung übernimmt der innere Strang des thermoplastischen Polymers die Funktion des Abstandshalters sowie des Trockenmittelträgers und dient außerdem als die Hauptwasserdampfsperre. Der äußere, in der Regel zweikomponentige Kleb-/Dichtstoff sorgt für die mechanische Festigkeit des Isolierglasverbundsystems. Dieses System ist in zahlreichen Patenten/Anmeldungen beschrieben, beispielsweise in der DE-C-2555381, DE-A-2555383, DE-A-2555384 sowie der EP-A-176388.

Die DE-A-4407892 beschreibt ein Verfahren zur Herstellung von Isolierglasverbundsystemen, bei dem die zwei oder mehr parallel angeordneten Glasscheiben auf Abstand gehalten werden und an ihrem Umfangsrand mit einem angespritzten sie auf Abstand haltenden Rahmen eingefaßt werden. Es wird gesagt, daß das Material, das zur Umspritzung verwendet wird, ein duroplastisches, thermoplastisches oder keramisches Material sein soll. Angaben über die Zusammensetzung des Spritzgußmaterials sind dieser Schrift nicht zu entnehmen, ebensowenig werden Angaben darüber gemacht, ob und wie das Gas bzw. die Luft in dem Zwischenraum zwischen den Glasscheiben trockengehalten werden kann.

Die EP-A-517067 beschreibt ein deformierbares bandförmiges Extrudat zur Versiegelung und Einhaltung des Abstandes zwischen zwei Isolierglasscheiben. Dabei besteht dieser verformbare Streifen aus einer fließresistenten Polymermatrix, die in ihrem Zentrum ein wellenförmig geformtes Flächengebilde enthält, dessen flächige Ausdehnung senkrecht zu den Glasscheiben angeordnet ist und in innigem Kontakt mit der Polymermatrix steht. Dieses wellenförmige flächige Gebilde hat die Funktion des Abstandshalters und dient gleichzeitig als Wasserdampfsperre. Das dem Scheibenzwischenraum zugewandte Volumen der Polymermatrix enthält dabei vorzugsweise ein Trockenmittel. Als Polymermatrix wird u.a. ein "semi-interpenetrating network", bestehend aus einem Butylkautschuk und einem leicht vernetzten Polyisobutylen vorgeschlagen. Dabei wird der vorgeformte verformbare Dichtstreifen durch Koextrusion der Polymermatrices und des wellenförmigen flächigen Gebildes erzeugt. Dieses vorgeformte Dichtband wird sodann auf eine der Scheiben gelegt, die zweite wird darüber positioniert und die beiden Scheiben werden miteinander verpreßt. Da nach der Applikation kein weiterer Härtungsprozeß stattfindet, neigt der Randbereich zwischen Dichtstoffstreifen und Glasscheibe zu kaltem Fluß.

Die DE-A-3843400 beschreibt eine Isolierglasscheibe, welche aus zwei einzelnen Glasscheiben besteht, die durch einen plastischen Abstandshalter randverbunden sind. Dieser Abstandshalter besteht aus zwei oder mehreren unterschiedlichen Schichten, von denen die innere Schicht den Scheibeninnenraum begrenzt und aus einem ausgehärteten Kleber gebildet ist, welcher eine die Feuchtigkeit aufnehmende Substanz enthält und die äußere Schicht durch einen ausgehärteten Kleber gebildet wird, welcher von dem die innere Schicht bildenden Kleber verschieden ist. Dabei besteht die innere Schicht des Klebers aus Polymeren mit einer höheren Wasserdampfdurchlässigkeit, diese Schicht kann zusätzlich ein pulverförmiges Trockenmittel, beispielsweise Molekularsieb, enthalten, während die äußere Kleberschicht eine geringe spezifische Wasserdampfdurchlässigkeit haben soll als die innere Schicht. Für die innere Schicht werden Polyurethane oder Silikonkautschuke vorgeschlagen, für die äußere Schicht wird ein Kleber auf Polysulfidbasis vorgeschlagen. Gegenüber den vorgenannten Isolierglassystemen hat dieses System den Vorteil, daß beide Kleberschichten aus reaktiven Materialien bestehen, die nach Applikation vemetzen, so daß der mechanische Zusammenhalt der Scheiben auch bei Belastungen durch Witterungseinflüsse besser gewährleistet ist. Nachteilig bei diesem Verfahren ist, daß in zwei Arbeitsgängen zwei unterschiedliche Materialien aufgetragen werden müssen.

Die WO 95/13449 beschreibt für diesen Einsatzzweck vorgefertigte Dichtungsprofile, die aus einem ganz oder teilweise vernetzten Polyisobutylencopolymer als Polymermatrix besteht und eine Aluminiumfolie als Wasserdampfdiffusionssperre enthält. Nachteilig bei diesem System ist, daß das Abstandshaltersystem aus mehreren unterschiedlichen Schichten aufgebaut ist, was sowohl in der Herstellung aufwendig ist als auch bei der Entsorgung und/oder dem Recycling unvorteilhaft ist.

Die EP-A-232873 beschreibt Dichtstoffe zur Herstellung abstandshalterfreie Isolierglassysteme auf der Basis von 20 bis 80 Gew.% epoxidiertem Naturkautschuk, 5 bis 30 Gew.% mindestens einer weiteren Epoxyverbindung und einem Trialkoxysilylgruppen-tragenden Amin oder Mercaptan als Vernetzungsmittel sowie üblichen Zusätzen wie Haftvermittlern, Klebrigmachern, Weichmachern, Füllstoffen, Trockenmitteln, Alterungs- und UV-Schutzmitteln. Isolierglasverbundsysteme auf dieser Basis weisen zwar hervorragende Alterungsbeständigkeit auf, ihr entscheidender Nachteil ist, daß sie nur als zweikomponentige Systeme darstellbar sind, wobei die beiden Reaktivkomponenten erst unmittelbar vor der Applikation vermischt werden können.

Es wurde jetzt gefunden, daß sich Mehrscheiben-Isolierglasverbundsysteme auf besonders kostengünstige Weise herstellen lassen, wenn Schmelzklebstoff-Zusammensetzungen verwendet werden, die eine Mischung aus mindestens einem reaktiven und mindestens einem nichtreaktiven Bindemittel enthalten, wobei mindestens ein reaktives Bindemittel aus silanfunktionellem Polyisobutylen und/oder silanfunktionellem hydriertem Polybutadien und/oder silanfunktionellem Poly-α-Olefin besteht und das oder die nichtreaktiven Bindemittel aus der Gruppe der Butylkautschuke, Poly-α-Olefine, Polybutene, Kautschuke auf Basis von Styrolblock-Copolymeren, Kautschuke auf Basis von statistischen Dien-Homo-und/oder Copolymeren ausgewählt werden.

Die bevorzugten Silan-funktionellen Gruppen des oder der reaktiven Bindemittel lassen sich durch die Formel (1) darstellen: 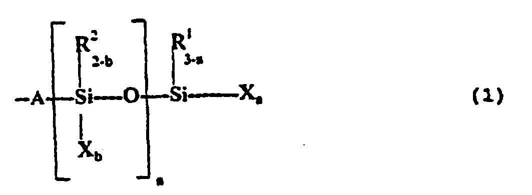 dabei kann -A-

-(CH₂)ₘ - (2)

-S-(CH₂)ₘ - (3)

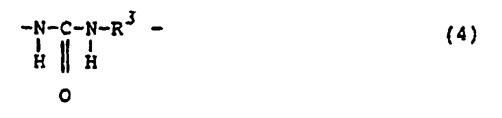

sein und R¹ und R² können gleich und verschieden sein und eine Alkylgruppe mit 1 bis 20 Kohlenstoffatomen, eine Arylgruppe mit 6 bis 20 Kohlenstoffatomen oder eine Arylalkylgruppe mit 7 bis 20 Kohlenstoffatomen sein, X kann eine Hydroxylgruppe oder eine hydrolysierbare Gruppe sein, a kann eine ganze Zahl zwischen 0 und 3 und b 0, 1 oder 2 sein, wobei die Summe von a und b größer oder gleich 1 ist und n eine ganze Zahl zwischen 0 und 18 ist. m ist eine ganze Zahl zwischen 0 und 4 und R³ ist

-(CH₂)ₘ-

oder

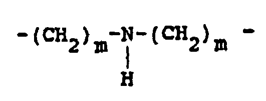

Das oder die reaktiven Bindemittel enthalten dabei mindestens eine silanfunktionelle Gruppe der Formel (1), vorzugsweise enthalten sie im statistischen Mittel zwischen 1 und 3 silanfunktionelle Gruppen pro Molekül. Dabei befinden sich die silanfunktionellen Gruppen entweder an den Enden des Makromoleküls (telechele Polymere) oder sie sind statistisch über die Polymerkette verteilt. Als hydrolysierbare Gruppen X können alle an sich bekannten hydrolysierbaren Gruppen zum Einsatz kommen, beispielhaft genannt seien hier Alkoxygruppen, Acetoxygruppen, Aminogruppen, Oximgruppen, Amidgruppen. Vorzugsweise werden Alkoxygruppen als hydrolysierbare Gruppen verwendet, ganz besonders bevorzugt sind die Methoxy- bzw. die Ethoxygruppe.

Die silanfunktionellen Polyisobutylene, silanfunktionellen Polybutadiene bzw. silanfunktionellen Poly-α-Olefine werden dabei in an sich bekannter Weise hergestellt, wobei in der ersten Stufe üblicherweise ein telecheles Polymer mit olefinisch ungesättigten Endgruppen entsteht, das in einer Folgereaktion mit Organosiliciumverbindungen zu silanfunktionellem Polyisobutylen, hydriertem Polybutadien oder Poly-α-olefin umgesetzt wird. Die verschiedenen Arten dieser Herstellung von silanfunktionellen Polyisobutylenen bzw. Polybutadienen ist beispielsweise in den folgenden Patentanmeldungen beschrieben:
EP-A-287025, EP-A-452875, EP-A-434840. EP-A-252372, EP-A-79456, EP-A-537660.

Weitere Möglichkeiten der Herstellung von silanfunktionellen Polyisobutylenen bzw. hydrierten Polybutadienen werden in der EP-A-312967 genannt. Außerdem ist es möglich, in einem ersten Verfahrensschritt ein hydroxyfunktionelles Polyisobutylen, hydroxyfunktionelles Polybutadien oder hydroxyfunktionelles Poly-α-Olefin herzustellen, und dieses mit einem Isocyanato-funktionellen Silan in einem anschließenden Schritt umzusetzen.

Eine weitere Möglichkeit zur Herstellung der silanfunktionellen Bindemittel besteht darin, daß die nichtfunktionellen Polyisobutylene, hydrierten Polybutadiene oder Poly-α-Olefine in einer Pfropfreaktion nach an sich bekanntem Verfahren mit entsprechenden organofunktionellen Silanen umgesetzt werden. Hierbei sind naturgemäß die Silangruppen statistisch in der Polymerkette verteilt.

Prinzipiell kann für das nichtreaktive Bindemittel jedes kautsckukartige Polymer ohne funktionelle Gruppen eingesetzt werden, da die Gesamtzusammensetzung jedoch vorzugsweise für die Herstellung von abstandshalterfreiem Isolierglas-Randverbunden eingesetzt werden soll, sollte auch das nichtreaktive Bindemittel aus solchen Polymeren ausgewählt werden, die eine geringe Gasdurchlässigkeit und insbesondere eine geringe Wasserdampfdurchlässigkeit für den Gesamtverbund gewährleisten. Die nichtreaktiven Bindemittel können ausgewählt werden aus der Gruppe der Poly-α-olefine, Kautschuke auf Basis von Styrol-Blockcopolymeren, Kautschuke auf Basis von statistischen Dien-Homo- und/oder Copolymeren sowie insbesondere Polybutene oder Butylkautschuke.

Aus der Gruppe der Poly-α-Olefine seien beispielhaft die Ethylen-Propylenelastomeren genannt, wie z.B. Ethylenpropylen-Copolymere, sowie Terpolymere des Ethylens und Propylens mit einem nichtkonjugierten Dien (EPDM). Weiterhin eignen sich Propen-Buten-Copolymere sowie Ethylenvinylacetat.

Bei den Kautschuken auf Basis von Styrol-Blockcopolymeren handelt es sich um die Di- bzw. Triblockcopolymeren aus Styrol mit einem Dien wie z.B. Butadien oder Isopren, wie sie z.B. unter dem Handelsnamen Kraton von der Fa. Shell erhältlich sind. Es können auch die hydrierten oder teilweise hydrierten Blockcopolymeren eingesetzt werden.

Beispiele für die statistischen Dien-Homo- und Copolymeren sind Polybutadien, Polyisopren, deren Copolymere sowie Styrolbutadiencopolymere, Acrylnitrilbutadiencopolymere sowie die partiell hydrierten oder vollständig hydrierten Dienpolymeren der letztgenannten Gruppe.

Naturkautschuk oder auch insbesondere epoxidierter Naturkautschuk können ebenfalls als nicht reaktives Bindemittel eingesetzt werden.

Wegen ihrer bekanntermaßen besonders guten Wasserdampf- bzw. Gassperrwirkung sind die Polybutene und/oder Polyisobuten, die durch stereospezifische Polymerisation von 1-Buten oder Isobuten hergestellten Polyolefine sowie die Butylkautschuke, d.h. Copolymere von Isobutylen mit Isopren ganz besonders bevorzugt.

Die verwendeten Schmelzklebstoff-Zusammensetzungen können auch Weichmacher enthalten, jedoch müssen die Weichmacher besonders sorgfältig nach folgenden Kriterien ausgewählt werden:
- extrem niedriger Anteil an flüchtigen Bestandteilen, damit ein sogenanntes "Fogging" über die Lebensdauer der Isolierglaseinheit vermieden wird. Beim Fogging treten bekanntermaßen geringe Mengen flüchtiger Bestandteile des Bindemittelsystems zunächst in den Scheibenzwischenraum und kondensieren an den kälteren Stellen der Scheibe.
- Die Wasserdampf- bzw. Gassperrwirkung der Polymermatrix darf durch den Weichmacher nicht in negativer Weise beeinflußt werden.

Beispiele für geeignete Weichmacher sind die an sich bekannte Phthalatweichmacher auf der Basis von Phthalsäurealkyl-oder Arylestern, vorausgesetzt, daß ihre flüchtigen Bestandteile so niedrig sind, daß diese Weichmacher kein Fogging verursachen und die Phthalatweichmacher außerdem verträglich mit dem Bindemittelsystem sind, d.h. nicht zum Ausschwitzen neigen.

Ganz besonders geeignet sind die flüssigen Polybutene und Polyisobutene als Weichmacher.

Die verwendeten Schmelzklebstoff-Zusammensetzungen können weiterhin an sich bekannte Bestandteile enthalten, hierzu gehören insbesondere wasserbindende Füllstoffe, vorzugsweise die als Molekularsieb bekannten Zeolithe vom 3 A-Typ in Pulverform, weiterhin können feinteilige inerte Füllstoffe wie z.B. gemahlene oder gefällte Kreiden, Kaoline, Tone und Ruße eingesetzt werden. Die Kreiden, Kaoline oder Tone können dabei sowohl in ihrer oberflächlich hydrophobisierten Form oder auch ohne Oberflächenvorbehandlung eingesetzt werden.

Weiterhin enthalten die Zusammensetzungen organofunktionelle Silane als Haftvermittler und/oder Vernetzer, hierzu gehören beispielsweise das 3-Glycidoxy-Propyltrialkoxysilan, 3-Acryloxypropyltrialkoxysilan, 3-Aminopropyltrialkoxysilan, Vinyltrialkoxysilan, N-Aminoethyl-3-Aminopropyl-Methyldialkoxysilan, Phenylaminopropyltrialkoxysilan, Aminoalkyltrialkoxydisilan oder i-Butylmethoxysilan. Als Alkoxygruppe sind dabei die Methoxy- bzw. Ethoxygruppe besonders bevorzugt.

Als Katalysatoren können alle bekannten Verbindungen eingesetzt werden, die die hydrolytische Spaltung der hydrolysierbaren Gruppen der Silangruppierungen katalysieren können sowie die anschließende Kondensation der Si-OH-Gruppe zu Siloxangruppierungen (Vernetzungsreaktion bzw. Haftvermittlungsfunktion). Ganz besonders bevorzugt sind hier die organischen Verbindungen des 2- und 4-wertigen Zinns.

Die Auswahl der evtl. verwendenden Alterungsschutzmittel richtet sich nach der Zusammensetzung der Bindemittel, es können hier Antioxidantien vom Typ der sterisch gehinderten Phenole, Thioether oder hochmolekularen Mercaptoverbindungen eingesetzt werden, UV-Schutzmittel vom Typ der bekannten Benzotriazole, Benzophenone oder vom Typ der HALS (Hindered Amine Light Stabilizer). Es kann sich als zweckmäßig erweisen, bekannte Ozonschutzmittel zuzusetzen, in Ausnahmefällen kann auch der Zusatz von Hydrolyseschutzmitteln notwendig werden.

Die erfindungsgemäßen Zwei- oder Mehrscheibenisoliergläser zeichnen sich durch die folgenden Merkmale gegenüber den Stand der Technik aus:
- die Klebstoffmischung dient dabei sowohl als Abstandhalter als auch als Matrix fiir die feuchtigkeitsaufnehmende Substanz,
- sie bewirkt auch den elastischen Randverbund der Isolierglasscheiben,
- dabei wird nicht nur das für die Lebensdauer der Isolierglaseinheit schädliche Wasser durch das Molekularsieb in der Matrix gebunden, sondern auch mindestens teilweise durch eine chemische Reaktion bei der Härtung verbraucht.

Besonderer Vorteil dabei ist, daß alle bisherigen Arbeitsschritte zur Herstellung eines konventionellen randhaftenden Randverbundes in einem Arbeitsgang vereinigt werden können. Ein weiterer Vorteil liegt darin, daß ein solches System, da es nur aus einem Material besteht, nach der Demontage der Isolierglaseinheit am Ende von dessen Lebenszyklus einem Recycling-Prozeß zugeführt werden kann, da es sich nicht wie beim Stand der Technik um ein Verbundmaterial aus verschieden zusammengesetzten Polymermatrices handelt.

Vorzugsweise bestehen die verwendeten Zusammensetzungen aus

| | |
|---|---|
| (a) silanfunktionellem Polyisobutylen, silanfunktionellem hydrierten Polybutadien oder silanfunktionellem Poly-α-Olefin | 20-70 Gew.% |
| (b) Butylkautschuk | 5-30 Gew.% |
| (c) Poly-α-Olefin | 5-30 Gew.% |
| (d) Molekularsieb vom Typ Zeolith 3A | 20-30 Gew.% |
| (e) Ruß | 5-30 Gew.% |
| (f) Katalysator | 0,1-2 Gew.% |
| (g) Organosilan | 0,1-2 Gew.%. |

Die Zusammensetzungen können dabei nach an sich bekannten Verfahren durch Mischen der Komponenten bis zur Homogenität unter hoher Scherung und ggf. unter Vakuum bzw. Schutzgas hergestellt werden. Ggf. muß während des Mischprozesses geheizt oder gekühlt werden. Da die Schmelzklebstoff-Zusammensetzungen mit Feuchtigkeit unter Vernetzung reagieren, müssen die Zusammensetzungen bis zu ihrer endgültigen Applikation beim Anwender vor Feuchtigkeit geschützt werden, um eine ausreichende Lagerstabilität zu gewährleisten.

Bei der Verwendung als Einkomponenten-Klebstoff-Dichtstoff werden im Herstellungsprozeß alle o.g. Komponenten miteinander gemischt, bei der zweikomponentigen Ausführung werden der oder die Katalysatoren (f) getrennt in einer Paste aus dem nichtreaktiven Bindemittel (b) und/ oder (c) und anteiligem Füllstoff (e) sowie ggf. Weichmacher als Komponente B hergestellt. Die übrigen Bestandteile werden als Komponente A hergestellt und beide Komponenten unmittelbar vor der Applikation gemischt. In einer anderen Ausführungsform besteht die Komponente A aus den Bestandteilen (a) bis (g) und die Komponente B besteht aus einer wasserhaltigen Paste, wobei das Wasser ggf. in Form von wasserabgebenden Verbindungen in dieser Paste vorliegt, wie z.B. Kristallwasser-haltigen Salzen. Ein Vorteil dieser Vorgehensweise ist die Möglichkeit, die Zusammensetzungen so zu gestalten, daß eine besonders schnelle Vernetzungsreaktion eintritt, so daß ein so hergestellter Isolierglasverbund nach besonders kurzer Zeit starken mechanischen Belastungen ausgesetzt werden kann.

Zur Herstellung der Isoliergläser werden die zu verbindenden Glasscheiben entweder in an sich bekannter Weise auf dem vorbestimmten Abstand gehalten und die Zusammensetungen werden ggf. unter Erwärmen und Profilieren mittels eines Extruderähnlichen Auftragsgerätes in den Umfangsrand der Scheiben gespritzt. Durch die Schmelzklebstoff-artige Konsistenz der Zusammensetzung erhält der Randverbund nach dem Abkühlen der Klebstoffzusammensetzung bereits eine erste Festigkeit, die ausreichend ist, um die Isolierglaseinheiten sofort weiter zu verarbeiten, zu transportieren oder zu lagern. Die Endfestigkeit wird durch den Vernetzungsprozeß der Silangruppierungen des reaktiven Bindemittels in Kombination mit den zugesetzten Organosilan durch Reaktion mit der Feuchtigkeit aus dem Scheibenzwischenraum und/oder der Umgebungsluft erzielt.

In einer anderen Ausführungsform wird der Schmelzklebstoff ggf. unter Erwärmen und Profilieren auf den Umfangsrand der einen Scheibe aufgetragen, die zweite oder weitere Scheibe wird so über der ersten Scheibe positioniert, daß die Scheiben deckungsgleich übereinander angeordnet sind. Anschließend werden die Scheiben so miteinander verpreßt, daß der Klebstoff die Umfangsränder beider oder aller Scheiben vollständig benetzt und der vorbestimmte Scheibenabstand erreicht wird. Auch bei dieser Ausführungsform wird die Anfangsfestigkeit des Randverbundes durch den Abkühlprozeß erzielt, während die Endfestigkeit durch Vernetzung mit Feuchtigkeit erzielt wird.

Wie bereits oben ausgeführt, erfolgt das Mischen der beiden Komponenten der zweikomponentigen Schmelzklebstoffe unmittelbar vor den eben beschriebenen Applikationsschritten, die Endfestigkeit des Randverbundes wird in dieser Ausführungsform schneller erreicht als bei der einkomponentigen Version.

## Patentansprüche

1. Zwei- oder Mehrscheibenisolierglas, **dadurch gekennzeichnet, daß** eine Schmelzklebstoff-Zusammensetzung, enthaltend eine Mischung aus mindestens einem reaktiven Bindemittel, ausgewählt aus silanfunktionellen Polyisobutylenen und/oder silanfunktionellen hydrierten Polybutadienen und/oder silanfunktionellen Poly-α-Olefinen, und mindestens einem nichtreaktiven Bindemittel, ausgewählt aus der Gruppe der Butylkautschuke, Poly-α-olefine, Polybutene, Kautschuke auf Basis von Styrol-Blockcopolymeren, Kautschuke auf Basis von statistischen Dien-Homo- und/oder
- Copolymeren, gleichzeitig als
- Abstandshalter zwischen den Scheiben
- Matrix für die Feuchtigkeit aufnehmenden Substanzen
- Wasserdampfsperre
- elastischer Randverbund
für das Isolierglas dient.

2. Zwei- oder Mehrscheibenisolierglas nach Anspruch 1, **dadurch gekennzeichnet, daß** die silanfunktionellen Gruppen des/der reaktiven Bindemittels durch die Formel (1) 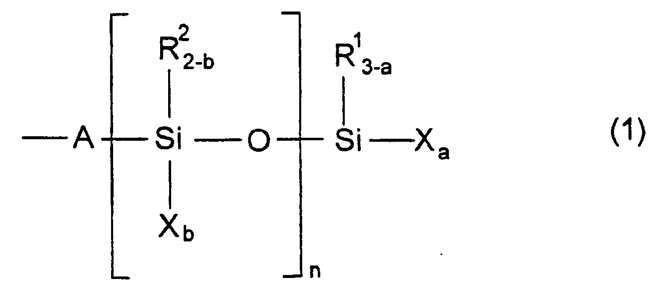 dargestellt werden, wobei -A-
-(CH₂)ₘ- (2),
-S-(CH₂)ₘ- (3)
oder 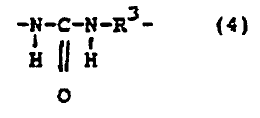 sein kann und R¹ und R² gleich oder verschieden sind und eine Alkylgruppe mit 1 bis 20 Kohlenstoffatomen, eine Arylgruppe mit 6 bis 20 Kohlenstoffatomen oder eine Aralkylgruppe mit 7 bis 20 Kohlenstoffatomen sein können, X eine Hydroxylgruppe oder eine hydrolysierbare Gruppe ist,
a 0, 1, 2 oder 3 und b 0,1 oder 2 ist, wobei die Summe von a und b größer/gleich 1 ist und n eine ganze Zahl zwischen 0 und 18 ist,
m eine ganze Zahl zwischen 0 und 4 ist und
R³
-(CH₂)ₘ-
oder 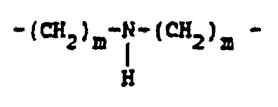 ist.

3. Verfahren zur Herstellung von Isoliergläsern nach Anspruch 1 oder 2, **gekennzeichnet durch** die folgenden Verfahrenssschritte:
(a) die zu verbindenden Glasscheiben werden auf dem vorbestimmten Abstand gehalten
(b) eine Schmelzklebstoff-Zusammensetzung, wie definiert in Anspruch 1 oder 2, wird ggf. unter Wärme und Profilierung zwischen den Umfangsrand der Scheiben gespritzt, und
(c) die Schmelzklebstoff-Zusammensetzung härtet unter Aufnahme von Feuchtigkeit aus dem Scheibenzwischenraum und/oder der Umgebungsluft zu einem elastischen Randverbund.

4. Verfahren zur Herstellung von Isoliergläsern nach Anspruch 1 oder 2, **gekennzeichnet durch** die folgenden Verfahrensschritte:
(a) die Schmelzklebstoff-Zusammensetzung, wie definiert in Anspruch 1 oder 2, wird auf den Umfangsrand einer Scheibe, ggf. unter Erwärmen und Profilierung aufgetragen,
(b) die zweite oder weitere Scheibe wird so über der ersten Scheibe positioniert, daß die Scheiben deckungsgleich übereinander angeordnet sind,
(c) die Scheiben werden so miteinander verpreßt, daß die Schmelzklebstoff-Zusammensetzung die Umfangsränder beider oder aller Scheiben vollständig benetzt und der vorbestimmte Scheibenabstand erreicht wird,
(d) die Schmelzklebstoff-Zusammensetzung härtet unter Aufnahme von Feuchtigkeit aus dem Scheibenzwischenraum und/oder der Umgebungsluft zu einem elastischen Randverbund.

## Claims

1. Double-sheet or multi-sheet insulating glazing, **characterized in that** a hotmelt adhesive composition comprising a mixture of at least one reactive binder, selected from silane-functional polyisobutylenes and/or silane-functional hydrogenated polybutadienes and/or silane-functional poly-α-olefins, and at least one nonreactive binder, selected from the group consisting of butyl rubbers, poly-α-olefins, polybutenes, rubbers based on styrene block copolymers, and rubbers based on random diene homo- and/or copolymers, serves simultaneously as
- spacer between the sheets
- matrix for the moisture-absorbing substances
- water vapour barrier
- elastic edge join
for the insulating glazing.

2. Double-sheet or multi-sheet insulating glazing according to Claim 1, **characterized in that** the silane-functional groups of the reactive binder(s) are depicted by the formula (1) 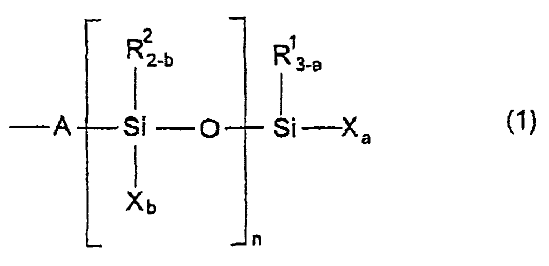 in which -A- can be
-(CH₂)ₘ- (2),
-S-(CH₂)ₘ- (3)
or 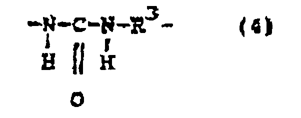 and R¹ and R² are identical or different and can be an alkyl group of 1 to 20 carbon atoms, an aryl group of 6 to 20 carbon atoms or an aralkyl group of 7 to 20 carbon atoms, X is a hydroxyl group or a hydrolysable group,
a is 0, 1, 2 or 3 and b is 0, 1 or 2, the sum of a and b being greater than or equal to 1, and n is an integer between 0 and 18,
m is an integer between 0 and 4 and
R³ is
0(CH₂)ₘ-
or

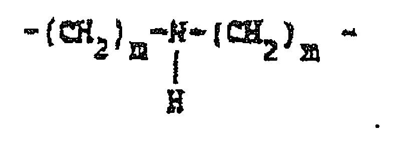

3. Process for producing insulating glazing systems according to Claim 1 or 2, **characterized by** the following steps:
(a) the glass sheets to be joined are held at the predetermined distance,
(b) a hotmelt adhesive composition as defined in Claim 1 or 2 is injected between the peripheral edge of the sheets, with or without heating and profiling, and
(c) the hotmelt adhesive composition cures, with absorption of moisture from the space between the sheets and/or from the ambient air, to form an elastic edge join.

4. Process for producing insulating glazing systems according to Claim 1 or 2, **characterized by** the following steps:
(a) the hotmelt adhesive composition as defined in Claim 1 or 2 is applied to the peripheral edge of a sheet, with or without heating and profiling,
(b) the second or further sheet is positioned over the first sheet so that the sheets are arranged in congruence one above the other,
(c) the sheets are pressed against one another such that the hotmelt adhesive composition completely wets the peripheral edges of both or of all the sheets and the predetermined sheet spacing is achieved,
(d) the hotmelt adhesive composition cures, with absorption of moisture from the space between the sheets and/or from the ambient air, to form an elastic edge join.

## Revendications

1. Verre isolant à deux ou plusieurs plaques,
**caractérisé en ce qu'**
une composition d'adhésif fusible contenant un mélange d'au moins un liant réactif, choisi parmi les polyisobutylènes à fonction silane et/ou des polybutadiènes hydrogénés à fonction silane et/ou des poly-α-oléfines à fonction silane, et d'au moins un liant non réactif choisi dans le groupe des caoutchoucs butyle, poly-α-oléfines, polybutènes, caoutchoucs à base de copolymères séquences de styrène, caoutchoucs à base d'homo- ou copolymères statistiques de diènes, sert simultanément
- d'espaceur entre les plaques,
- de matrice pour les substances absorbant l'humidité,
- de barrière à la vapeur d'eau,
- d'assemblage élastique des bords,
pour le verre isolant.

2. Verre isolant à deux ou plusieurs plaques selon la revendication 1,
**caractérisée en ce que**
les groupes à fonction silane du/des liant(s) réactif(s) sont représentés par la formule (1) 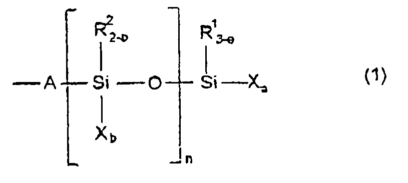 A pouvant être
-(CH₂)ₘ- (2),
ou
-S-(CH₂)ₘ- (3)
ou 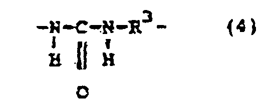 et R¹ et R² étant identiques ou différents et pouvant être un groupe alkyle ayant de 1 à 20 atomes de carbone, un groupe aryle ayant de 6 à 20 atomes de carbone ou un groupe aralkyle ayant de 7 à 20 atomes de carbone,
X étant un groupe hydroxy ou un groupe hydrolysable,
a étant 0, 1, 2 ou 3 et b étant 0, 1 ou 2, la somme de a et b étant ≥ 1,
n étant un nombre entier compris entre 0 et 18,
m étant un nombre entier compris entre 0 et 4, et
R³ étant
-(CH₂)ₘ-
ou

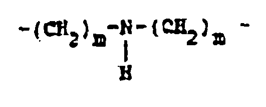

3. Procédé pour la Fabrication de verres isolants selon la revendication 1 ou 2,
**caractérisé par**
les étapes de processus suivantes :
(a) les plaques de verres à assembler sont maintenues à la distance préétablie,
(b) une composition selon la revendication 1 ou 2 est injectée, éventuellement avec chauffage et profilage, entre les bords des plaques, et
(c) la composition est durcie par absorption de l'humidité provenant de l'espace entre les plaques et/ou de l'air ambiant, en un assemblage élastique des bords.

4. Procédé pour la fabrication de verres isolants selon la revendication 1 ou 2,
**caractérisé par**
les étapes suivantes de processus :
(a) la composition définie à la revendication 1 ou 2 est appliquée sur le pourtour d'une plaque, éventuellement avec chauffage et profilage,
(b) la seconde ou l'autre plaque est placée sur la première plaque en une position telle que les plaques sont disposées l'une sur l'autre en coïncidant,
(c) les plaques sont pressées l'une contre l'autre de manière que l'adhésif humecte totalement les bords des deux ou de toutes les plaques et que l'écartement préétabli des plaques soit réalisé, et
(d) la composition d'adhésif est durcie par absorption de l'humidité provenant de l'espace entre les plaques et/ou de l'air ambiant, en un assemblage élastique des bords.
